# EUROPEAN PATENT APPLICATION

(11) **EP 2 273 108 A2**
(43) Date of publication of application: **12.01.2011**
(21) Application number: 10166697.2
(22) Date of filing: 21.06.2010
(51) Int. Cl.: F03D 11/00

(54) **Spaceframe nacelle for a wind turbine generator and method of manufacturing the spaceframe nacelle**

(30) Priority: 30.06.2009 US 494666
(71) Applicant: General Electric Company, Schenectady, NY 12345 (US)
(72) Inventor: Willey, Lawrence Donald, Simpsonville, SC 29680 (US); Subramanian, Shanmuga-Priyan, 48429, Rheine (DE); Sathian, Sujith, Simpsonville, SC 29681 (US)
(74) Representative: Bedford, Grant Richard

(57) **Abstract**

A nacelle (106) for a wind turbine generator (100) is provided. The nacelle (106) includes a spaceframe (160,260) including at least one exterior panel (180) and at least one interior panel (182) joined to the exterior panel, each of the exterior and interior panels having a plurality of generally U-shaped channel portions with flanges extending outward from the channel portion, the flanges (186) of the exterior panel being joined to the flanges of the interior panel to define a plurality of ribs (264), a plurality of joints (266), and a plurality of openings (268).

## Description

The field of the invention relates generally to nacelles for wind turbine generators, and more particularly to a nacelle having a spaceframe fabrication and a method of manufacturing the spaceframe nacelle.

Wind turbine generators use wind energy to generate electricity and typically include a tower, a nacelle mounted on a top of the tower, and a hub and blade assembly connected to the nacelle. Wind causes the hub and blade assembly to rotate with respect to the nacelle thereby creating mechanical energy that is converted by a generator, which is typically housed in the nacelle, into useable electrical energy. The nacelle encloses the inner workings of the machine head and includes a heavy bedplate that supports the main shaft, bearings and drivetrain components. The bedplate can be fabricated from thick metal plates or cast from molten metal, which adds substantial weight to the top of the tower.

However, much of the weight of the bedplate and nacelle is excessive in that the nacelle is primarily a non-load bearing enclosure used to keep the weather from directly impacting the various components (e.g., generator) of the wind turbine generator housed therein. The excessive weight of the bedplate and nacelle significantly increases manufacturing cost, transportation cost, assembly cost, and maintenance cost of the wind turbine generator. In addition, the weight of the machine head also impacts the tower structure needed to support it with its attendant costs.

In one aspect according to the present invention, a nacelle for a wind turbine generator generally includes a spaceframe including at least one exterior panel and at least one interior panel joined to the exterior panel. Each of the exterior and interior panels have a plurality of generally U-shaped channel portions with flanges extending outward from the channel portion. The flanges of the exterior panel are joined to the flanges of the interior panel to define a plurality of ribs, a plurality of joints, and a plurality of openings.

In another aspect, a nacelle for a wind turbine generator generally comprises a spaceframe including a plurality of ribs, a plurality of joints, and a plurality of openings. The spaceframe comprises at least a first region and a second region. The first region has a first load-bearing strength and the second region has a second load-bearing strength. The first load-bearing strength of the first region is greater than the second load-bearing strength of the second region.

In still another aspect, a wind turbine generator generally includes a tower, a nacelle rotatably coupled to a tower top for rotational movement with respect to the tower, and a blade and hub assembly operatively coupled to the nacelle. The nacelle includes a spaceframe including at least one exterior panel and at least one interior panel joined to the exterior panel. The exterior panel and interior panel collectively define a plurality of ribs, a plurality of joints, and a plurality of openings.

In yet another aspect, a method of constructing a spaceframe for a nacelle generally includes stamping a first sheet of metal to form a plurality of openings therein and forming a plurality of generally U-shaped channels with flanges extending outward from the channels in the first sheet of metal. A second sheet of metal is stamped to form a plurality of openings therein and formed to have a plurality of generally U-shaped channels with flanges extending outward from the channels in the second sheet of metal. The U-shaped channels and associated flanges of the first sheet of metal are aligned with the U-shaped channels and associated flanges of the second sheet of metal so that the aligned U-shaped channels cooperatively define a generally box-shaped cross-section and the flanges are in engagement. The flanges of the first sheet of metal and the flanges of the second sheet of metal are securely joined.

Various aspects and embodiments of the present invention will now described in connection with the accompanying drawings, in which:
Figure 1 is a perspective view of a wind turbine generator.
Figure 2 is an enlarged, fragmentary perspective view of the wind turbine generator of Figure 1 with portions broken away to show internal components.
Figure 3 is a perspective view of a nacelle of the wind turbine generator with a shell of the nacelle removed to show a spaceframe of the nacelle.
Figure 4 is an enlarged, fragmentary perspective view of a small portion of the spaceframe of the nacelle.
Figure 5 is a cross-sectional view of a single rib of the spaceframe having an exterior panel and an interior panel.
Figure 6 is an enlarged, fragmentary perspective view of a small portion of another embodiment of a spaceframe suitable for the nacelle.
Figures 7A-7C are schematic views illustrating one embodiment for joining the exterior panel and the interior panel of the ribs of the spaceframe wherein the exterior and interior panels are joined using resistance seam welding.
Figure 8A is a cross-sectional view of a single rib of the spaceframe having the exterior panel and the interior panel joined using resistance seam welding.
Figure 8B is an enlarged, fragmentary cross-sectional view showing the weld joining the exterior panel and the interior panel.
Figure 9 is an enlarged, fragmentary perspective of a small portion of the spaceframe of the nacelle illustrating one suitable pattern in which the exterior panel and the interior panel can be joined using resistance seam welding.
Figure 10 is an enlarged, fragmentary perspective of a small portion of the spaceframe of the nacelle illustrating another suitable pattern in which the exterior panel and the interior panel can be joined using resistance seam welding.
Figure 11 is a cross-sectional view of a single rib of the spaceframe having the exterior panel and the interior panel joined using a single-sided high-energy beam welding process (e.g., laser welding, electron beam welding).
Figure 12 is a cross-sectional view of a single rib of the spaceframe having the exterior panel and the interior panel joined using a double-sided high-energy beam welding process.
Figures 13A and 13B are cross-sectional views of a single rib of the spaceframe having the exterior panel and the interior panel joined using fillet welding.
Figures 14A and 14B are cross-sectional views of a single rib of the spaceframe having the exterior panel and the interior panel joined using fusion welding.
Figures 15A and 15B are cross-sectional views of a single rib of the spaceframe having the exterior panel and the interior panel mechanically joined using fasteners (e.g., rivets).
Figure 16 is a plan view of an insert for crimping the exterior panel and interior panel of the spaceframe together.
Figure 17 is an elevation view of the insert of Figure 16.
Figure 18 is an enlarged, fragmentary cross-sectional view showing the insert being crimped about the exterior panel and the interior panel of the spaceframe.
Figure 19 is an enlarged, fragmentary perspective view of a small portion of the spaceframe of the nacelle illustrating the exterior panel and the interior panel being mechanically joined by crimping portions of the panels together using the insert.

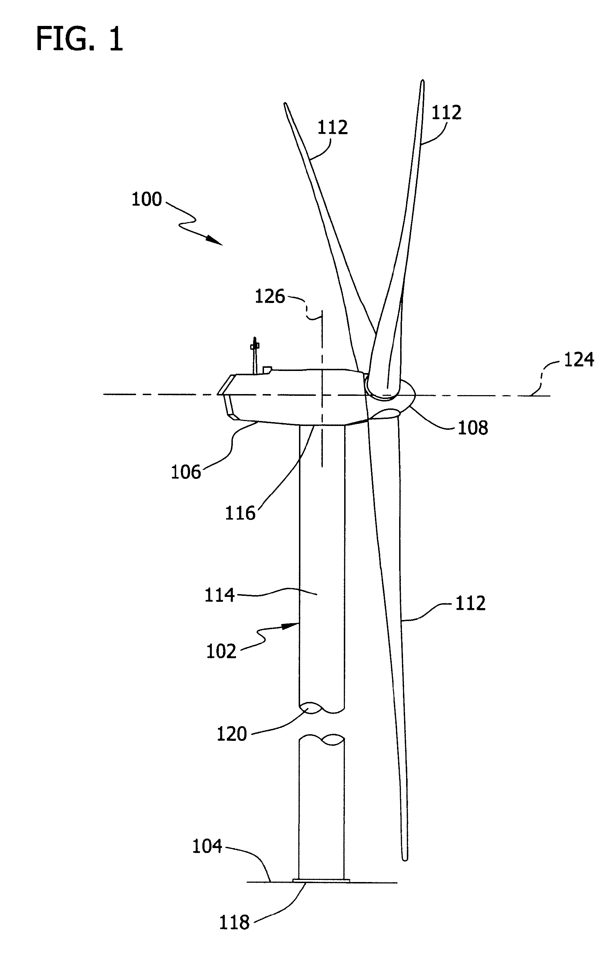

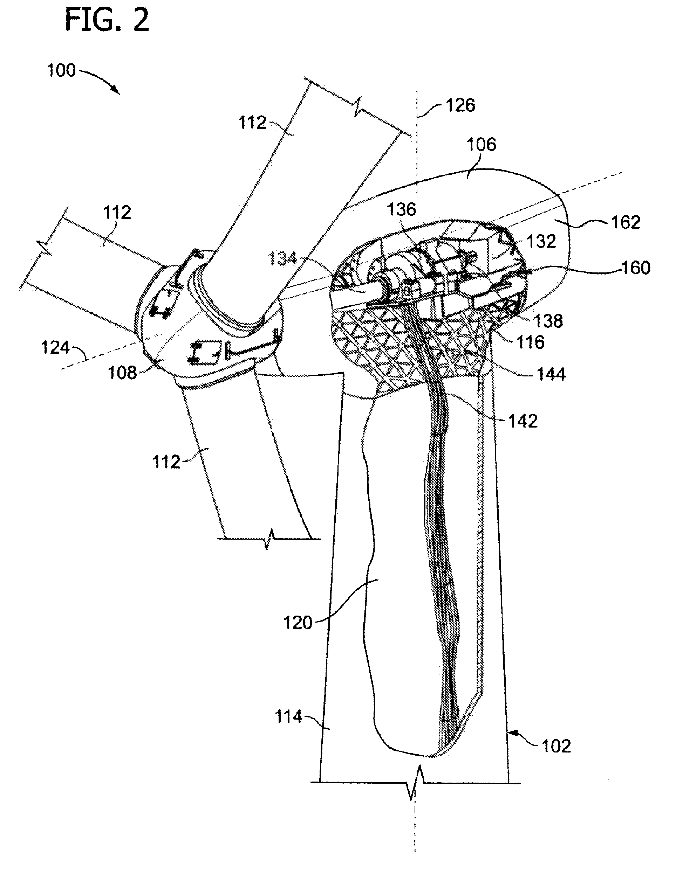

Figure 1 illustrates a horizontal axis wind turbine generator 100 having a tower 102 extending from a supporting surface 104, a nacelle 106 mounted on the tower 102, and a blade and hub assembly 108 coupled to the nacelle 106. The blade and hub assembly 108 includes a plurality of blades 112 mounted thereto. In the exemplary embodiment, the blade and hub assembly 108 has three blades 112, but it is understood that the blade and hub assembly 108 may include more or less than three blades 112. As seen in Figures 1 and 2, the tower 102, which in the exemplary embodiment is tubular, includes a sidewall 114, a top 116, a bottom 118, and a passageway 120 that extends from the bottom 118 to the top 116. Thus, the passageway 120 in the tower 102 extends between the supporting surface 104 and the nacelle 106. It is contemplated that other types of wind turbine generators (e.g., vertical axis wind turbine generators) can be used in alternative embodiments.

The blades 112 are spaced about the blade and hub assembly 108 to facilitate rotating the blade and hub assembly 108 to transfer kinetic energy from the wind into usable mechanical energy, and subsequently, electrical energy. More specifically, as the wind strikes the blades 112, the blade and hub assembly 108 is rotated about its rotational axis 124. Preferably, the blades 112 are positioned such that they face into the wind. Since the wind direction readily changes, the blades 112, and thereby the nacelle 106, need to be able to rotate with respect to the tower 102 so that the blades can remain substantially facing into the wind. That is, by rotating the nacelle 106, the blades can be rotated such that the wind direction is generally parallel to the rotational axis 124 to maximize the amount of wind striking the blades. As such, the nacelle 106 and the blades 112 can rotate with respect to the tower 102 about a rotational axis 126 that is generally transverse to the blade and hub assembly rotational axis 124 and that is substantially coaxial with a longitudinal axis of the tower 102.

A portion of the nacelle 106 is broken away in Figure 2 to illustrate some of the components housed in the nacelle 106. In the exemplary embodiment, such components include a low speed rotor shaft 134 (or main shaft) coupled to the blade and hub assembly 108, a gearbox 136, a high speed shaft 138, and an electric generator 132. Rotation of the blade and hub assembly 108 causes the low speed rotor shaft 134 to rotatably drive the gearbox 136, which in turn, rotates the high speed shaft 138. The high speed shaft 138, in turn, rotatably drives the generator 132, which produces electricity. Thus, the nacelle 106 houses the generator 132 and various other components of the wind turbine generator 100. It is understood that the generator 132 and various other components can be different than those illustrated herein in alternative embodiments (e.g., compact geared drive train and direct drive/gearless architectures etc.).

With reference to Figure 2, a plurality of cables 142 are coupled to the generator 132 and to other components housed in the nacelle 106 to transfer the generated electricity from the generator 132 to a power grid or other suitable location, and to supply power and controls to the generator 132 and associated equipment. An opening 144 is formed in the nacelle 106 to enable the cables 142 to be routed from the nacelle 106 into the passageway 120 of the tower 102. The passageway 120 in the tower 102 provides an area for cables 142 to be routed from, and into, the nacelle 106 from a location outside of the wind turbine generator 100. The passageway 120 and the opening 144 formed in the nacelle 106 may also cooperatively provide a manway for allowing maintenance personnel or other authorized personnel access to the nacelle 106 and the various components housed therein.

As illustrated in Figure 2, the nacelle 106 includes a spaceframe 160 and a shell 162 that covers the spaceframe. In an exemplary embodiment, the shell 162 comprises a weatherproof, durable fabric covering configured to provide protection for the various components housed in the nacelle 106 from the environment (e.g., the weather). The shell 162 may also be configured to provide sound-dampening. In one embodiment, the shell 162 can be selected from suitable materials that are poor transmitters of mechanically stimulated acoustic emissions, that will not contribute to machinery noise transmission into the spaceframe, and/or that eliminate "panel" vibration induced sound transmission to the outside environment. It is understood that the shell 162 can be constructed from any suitable material including fabrics, metals, plastics, fiberglass, or combinations thereof.

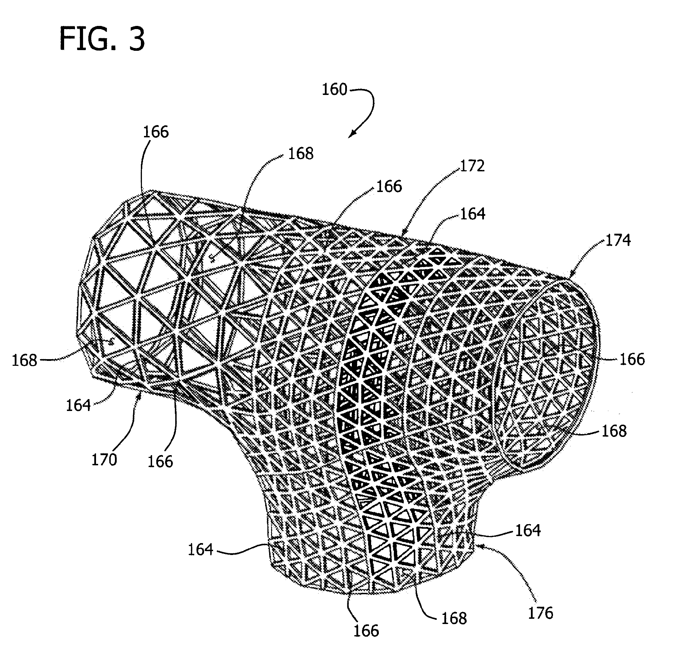

With reference now to Figure 3, the spaceframe 160 includes a plurality of ribs 164, a plurality of joints 166, and a plurality of openings 168. As seen in Figure 3, most of the openings 168 in the spaceframe 160 are generally triangular in shape and are defined by three ribs 164 and three associated joints 166. Most of the joints 166 are formed by the convergence of six ribs 164 but it is contemplated that the number of ribs 164 converging at each of the joints 166 could be more or fewer. The illustrated spaceframe 160 further includes a plurality of regions (e.g., a back region 170, a middle region 172, a front region 174, and a transition region 176). It is understood, however, that the spaceframe 160 can have more or fewer regions in alternative embodiments. In one such example, the transition region 176 of the spaceframe 160, which is provided for connecting the spaceframe 160 to the tower 102, can be omitted.

In one embodiment, the various regions 170, 172, 174, 176 of the spaceframe 160 can have different predetermined load-bearing strength characteristics. In the exemplary embodiment illustrated in Figure 3, the load-bearing strengths of the middle region 172 (broadly, "a first region"), the front region 174, and the transition region 176 are greater than the load-bearing strength of the back region 170 (broadly, "a second region"). In the illustrated embodiment, the length of each of the ribs 164 is greater in the back region 170 than in the other regions 172, 174, 176 of the spaceframe 160. As a result, the openings 168 are larger in the back region 170 than in the other regions 172, 174, 176. During use, the back region 170 is exposed to less stress than the other regions 172, 174, 176 of the spaceframe 160. Thus, areas of the spaceframe 160 exposed to lower stress during use have a wider network pattern, whereas a finer network pattern is used in areas exposed to higher stress during use.

The load-bearing strength of the various regions 170, 172, 174, 176 of the spaceframe 160 can be varied in different ways including using a different type of material in each of the different regions, changing the thickness of the material in the different regions, changing the cross-section shape of the material, or a combination thereof. In one embodiment, for example, the spaceframe 160 can be constructed of low to medium strength steel in regions of the spaceframe exposed to lower stress during use and high strength steel in regions exposed to higher stress during use.

Moreover, the overall mass of the spaceframe 160 is considerably less than the mass of nacelles constructed using conventional techniques. For example, a conventional cast or fabricated nacelle for a 7.5MW wind turbine generator having a bedplate has an average mass of approximately 91.6 metric tons. On the other hand, a comparable spaceframe 160 has an average mass between 21.9 metric tons and about 45.5 metric tons. Accordingly, the average mass of the spaceframe 160 for a 7.5MW wind turbine generator is approximately 50% to 76% less than the average mass of a conventional nacelle for the same sized wind turbine generator.

The spaceframe 160 can be optimized, non-optimized, or a continuation thereof. An optimized spaceframe 160 includes specifically tailoring the different regions 170, 172, 174, 176 of the spaceframe to exhibit one or more predetermined performance characteristic (e.g., load-bearing strength, stiffness, fatigue life). The spaceframe can be optimized by varying the size of the openings 168, the joining method (which are described in detail below), and the thickness and/or type of the material used to make the ribs 164 and joints 166. As a result, each of the specific regions 170, 172, 174, 176 of the spaceframe 160 can be tailored to have predetermined strength, stiffness, and fatigue life. The spaceframe 160 is considered to be non-optimized if it has only one size opening or repeating pattern and only one joining method used throughout the structure. Typically, the average mass of the optimized spaceframe 160 is less than half of that of a comparable non-optimized spaceframe.

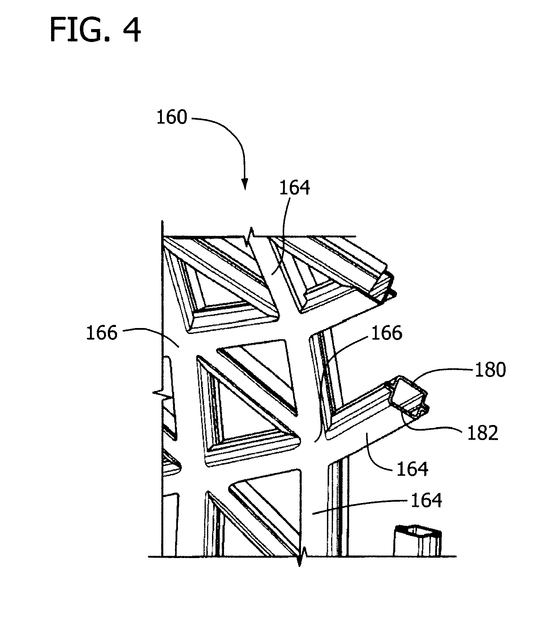

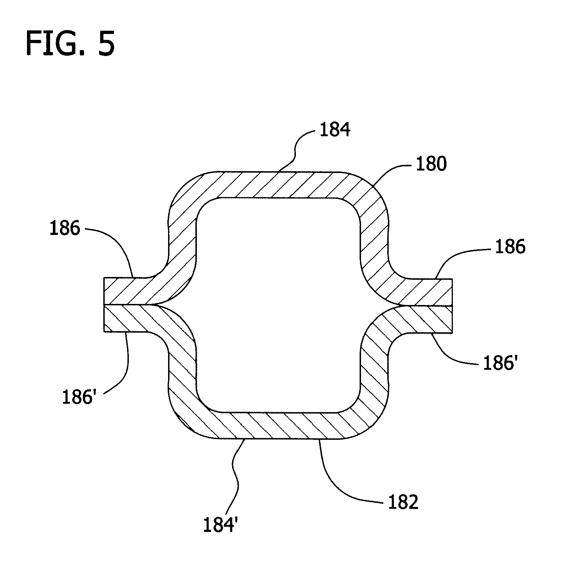

Figure 4 shows an enlarged, fragmentary perspective view of a small portion of the spaceframe 160 with several ribs 164 being cut-away to show their cross-sectional shape. A cross-section of one of the ribs 164 is shown in Figure 5. As seen in Figures 4 and 5, the spaceframe 160 includes an exterior panel 180 coupled to an interior panel 182. Each of the panels 180, 182 in the exemplary embodiment has a plurality of generally U-shaped channel portion 184, 184' with flanges 186, 186' extending outward from each side of the channel portion. In the illustrated embodiment, the exterior panel 180 and interior panel 182 have substantially the same cross-section shape but it is understood that their cross-sectional shapes can be different.

The exterior panel 180 is joined to the interior panel 182. More specifically, the flanges 186 of the exterior panel 180 are aligned with and joined to the flanges 186' of the interior panel 182 as explained in more detail below. As a result, the exterior panel 180 and interior panel 182 cooperatively define the plurality of ribs 164, joints 166, and openings 168 of the spaceframe 160. As seen in Figures 4 and 5, each of the ribs 164 of the exemplary embodiment of the spaceframe 160 have a generally square (or box) cross-sectional profile but it is understood that the cross-sectional shape of the ribs 164 can be different in alternative embodiments.

In the exemplary embodiment, each of the exterior panel 180 and the interior panel 182 are sheet metal or plate metal members. First and second sheets of metal are stamped to form the openings 168 and pressed to form the U-shaped channel portions 184, 184' and the flanges 186, 186' for fabricating the respective exterior and interior panels 180, 182. In one embodiment, the exterior panels 180 and interior panels 182 are offset from each other such that their peripheries are not aligned with each other. In other words, the interior panels 182 are staggered with respect to the exterior panels 180. In the illustrated embodiment, the exterior panel 180 and interior panels 182 are constructed from the same material, with the same thickness, and with the same cross-sectional shape. It is contemplated, however, that the exterior and interior panels 180, 182 or portions thereof can be formed from different materials, materials having different thicknesses, and/or different cross-sectional shapes. It is also contemplated that each of the exterior panel 180 and the interior panel 182 of the spaceframe 160 may include a single panel member or a plurality of panel members.

The spaceframe 160, and more particularly the exterior and interior panels 180, 182 thereof, can be constructed of metal, metal alloys, composites, polymers, and/or combinations thereof. In one embodiment, the spaceframe 160 is constructed using metal alloys such as an aluminum alloy or a steel alloy. In another embodiment, the spaceframe 160 is constructed from steel materials that are similar to those used in the automobile and truck industries including mild steel/low carbon steel, dent resistant steel, high strength steel, and heat/treatable/martensitic steels. Mild steel/low carbon steel (MS) has excellent formability, manufacturability, and low cost. Dent resistant steel (DRS) is a low-carbon, higher strength steel. High strength steel (HSS) is used where durability is the primary concern. Complex shapes, however, may be more difficult to manufacture with high strength steel. Heat-treatable/martensitic steel offers high strength-to-weight ratio (used to reduce weight for light-weight designs) but it is expensive.

Other materials can also be used to form the spaceframe 160. For example, medium carbon steel, high carbon steel, alloy steels including Cr, Ni, Si, and Mn, may also be used for constructing the spaceframe 160. In another embodiment, combinations of different materials may be used to construct the spaceframe 160. For example, the spaceframe 160 may utilize high alloy, high strength steel in higher stress regions and low alloy, low strength, and less expensive steel in lower stress regions. In one embodiment, the exterior panel 180 and the interior panel 182 each have a thickness between about 6-9 millimeters (mm), which is two or three times greater then the sheet metal or panel metal members typically used in automotive applications (e.g., 2-3 mm). As mentioned above, it is contemplated that the thickness of the exterior panel 180 and/or the interior panel 182 of the spaceframe 160 can vary in different areas of the spaceframe.

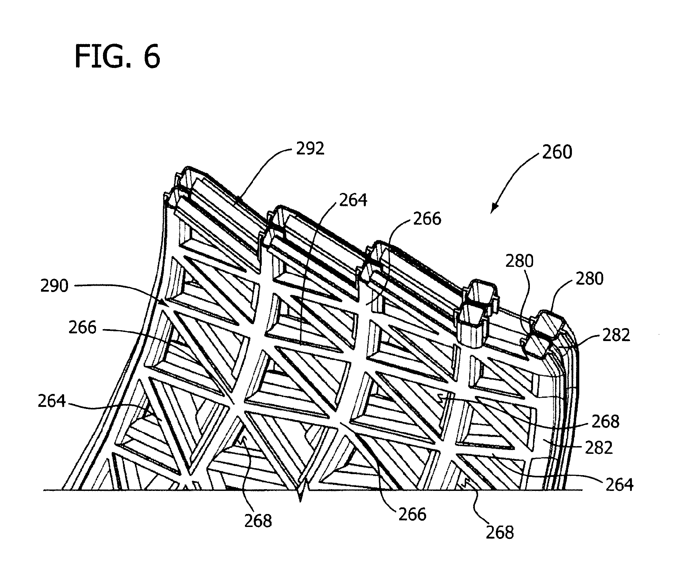

Figure 6 shows an embodiment of a multiple layer spaceframe 260 having an inner layer 290 and an outer layer 292. Each of the inner and outer layers 290, 292 has substantially the same construction, which is substantially similar to the spaceframe 160 illustrated in Figures 3-5. More specifically, each of the inner and outer layers 290, 292 includes a plurality of ribs 264, a plurality of joints 266, and a plurality of openings 268 that are defined by joining an exterior panel 280 to an interior panel 282. It is understood that the inner and outer layers 290, 292 can have different constructions. That is, the inner and outer layers 290, 292 can have different shapes, be made from different materials, and/or have different thicknesses. It is also understood that the nacelle 106 can include the multiple layer structure seen in Figure 6 in some regions thereof and the single layer structure seen in Figures 3-5 in other regions.

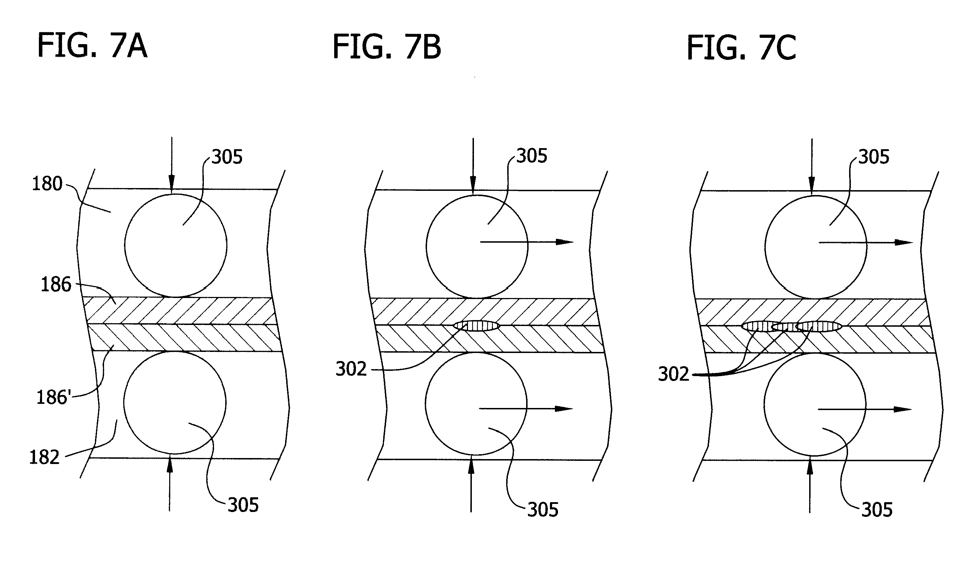

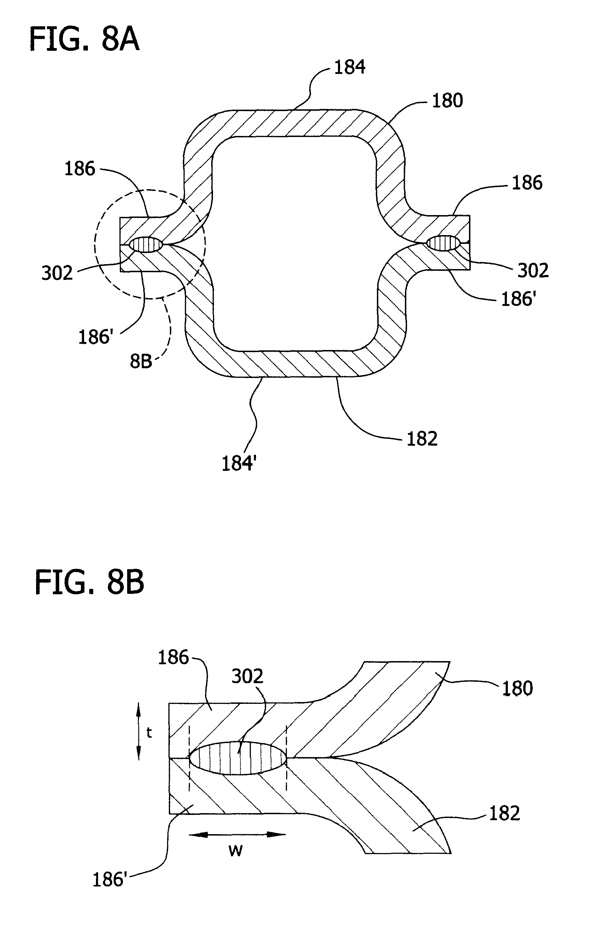

The exterior panel 180 of the spaceframe 160 can be joined to the interior panel 182 in any suitable manner including welding, riveting, and crimping. In one suitable method, which is illustrated in Figures 7A - 8B, the exterior panel 180 and the interior panel 182 can be joined using a resistance seam welding process. In this process, a series of overlapping spot welds 302, which collectively form a continuous leak tight joint, are used to join the exterior and interior panels 180, 182 together. As illustrated in Figure 7A-7C, the spot welds 302 are made using a pair of rotating copper alloy wheel electrodes 305. During the welding process, one of the wheel electrodes 305 is placed on the flange 186 of the exterior panel 180 and the other wheel electrode 305 is placed on the flange 186' of the interior panel 182 (Figure 7A). As seen in Figure 7B, the wheel electrodes 305 are then moved along the respective flanges 186, 186' of the exterior and interior panels 180, 182. The wheel electrodes 305 apply a generally constant compression force to the flanges 186, 186' and are moved at a generally constant speed. A pulsed current is applied to the wheel electrodes 305 as the wheel electrodes are moved along the flanges 186, 186' to thereby weld the exterior panel 180 and interior panel 182 of the spaceframe 160 together. As illustrated in Figure 7C, the resulting welds 302 include a series of overlapping resistance spot welds made progressively along the length of the flanges 186, 186'. In one embodiment, the resulting welds 302 have a width (w) that exceeds a thickness (t) of at least one of the flanges 186, 186' being joined together as shown in Figures 8A and 8B.

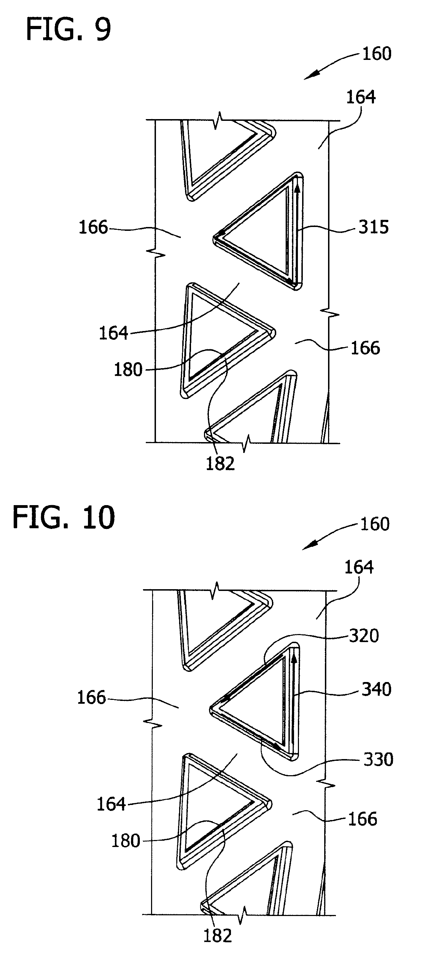

With reference to Figure 9, resistance seam welding can be used to join the exterior panel 180 and the interior panel 182 by welding the two panels together along a continuous generally triangular welding path 315. In this embodiment, the exterior panel 180 and the interior panel 182 are welded together along the length of the ribs 164 of the spaceframe 160 as well as through the joints 166 thereof. In another embodiment, resistance seam welding can be used to join the exterior panel 180 and the interior panel 182 by welding the two panels together along a plurality of discrete generally linear welding paths 320, 330, 340 (shown in Figure 10). In this embodiment, the exterior panel 180 and the interior panel 182 are welded together along the length of the ribs 164 of the spaceframe 160 but not through the associated joints 166. In one configuration, the joints 166 of the spaceframe 160 are free from welds 302. In another configuration, the joints 166 of the spaceframe 160 are subsequently welded using resistance seam welding or another suitable welding technique. It is contemplated that other welding paths can be used in alternative embodiments.

Resistance seam welding can by done at high speeds as compared with many other welding techniques. Moreover, resistance seam welding can be used to weld low strength carbon steel plates to high strength carbon steel plates. Thus, when different metals are used to construct the exterior panel 180, the interior panel 182, or portions thereof, resistance seam welding can be suitably used to join the panels together. Another suitable welding technique that can be used to join the exterior panel 180 and the interior panel 182 of the spaceframe 160 is a high-energy beam welding process such as electron beam welding or laser beam welding. Electron beam welding is a fusion welding process that produces coalescence of materials with heat obtained by impinging a beam composed of high energy electrons onto a joint to be welded. Laser beam welding is a fusion joining process that produces coalescence of materials with the heat obtained from concentrated beam of coherent, monochromatic light impinging on a joint to be welded. Laser beam welding is a low heat input process that produces low part distortion. Because laser beam welding does not use electrodes, the welded metal is free from contamination that may be present when electrodes are used in the welding process. Both electron beam welding and laser beam welding can be focused to a smaller area.

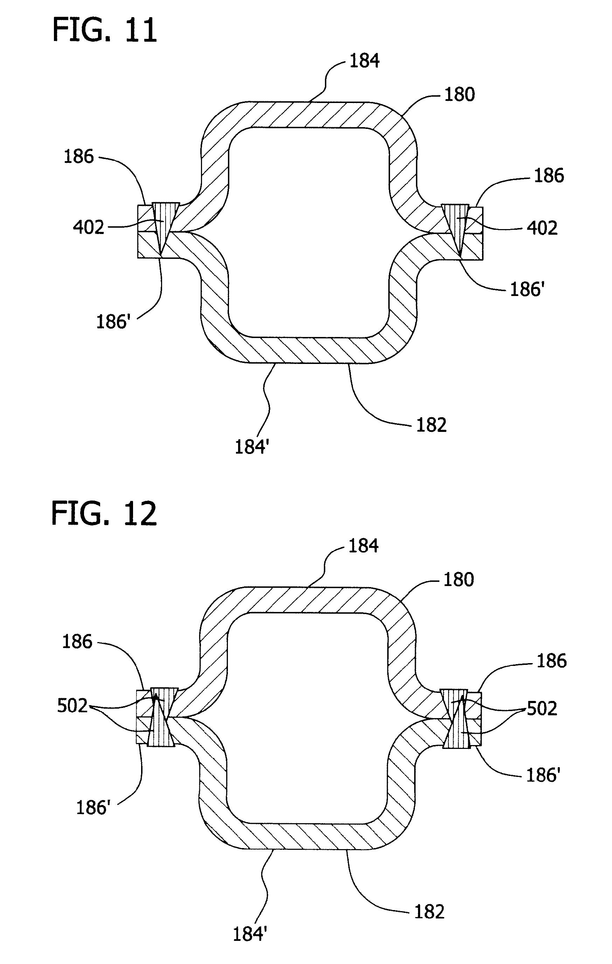

Figure 11 illustrates welds 402 that were created from a single-sided high-energy beam welding process (e.g., electron beam welding, laser beam welding). The welds 402 securely join the flanges 186, 186' of the exterior and interior panels 180, 182 together. In the illustrated embodiment, the high-energy beam acted on the flange 186 of the exterior panel 180 but it is understood that the high-energy beam could have acted on the flange 186' of the interior panel 182. In another embodiment, a double-sided high-energy beam welding process can be used to act on the flange 186 of the exterior panel 180 and the flange 186' of the interior panel 182 to create welds 502 (shown in Figure 12) for securely joining the panels together.

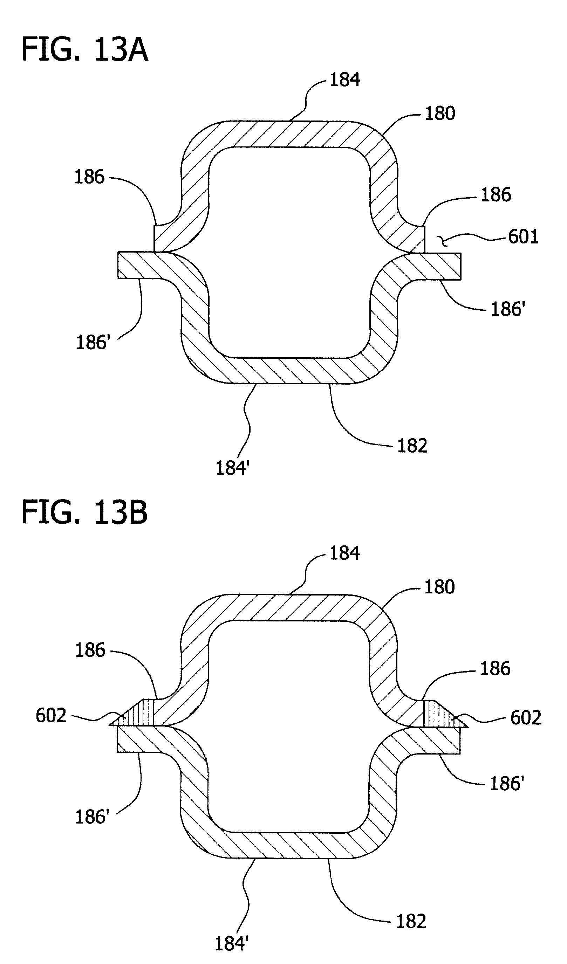

Figures 13A and 13B illustrate a fillet welding process that can be used to join the exterior panel 180 and the interior panel 182 together. In the illustrated embodiment, each of the flanges 186 of the exterior panel 180 are shortened (e.g., by cutting) or formed shorter than the flanges 186' of the interior panel 182 so that the flanges 186' of the interior panel 182 extend outward beyond the flanges 186 of the exterior panel 180 (shown in Figure 13A). It is understood that the flanges 186' of the interior panel 182 could have been shortened or formed shorter than the flanges 186 of the exterior panel 180. As seen in Figure 13B, fillet welds 602, which are generally triangular in cross-section, are deposited onto the flanges 186' of the interior panel 182 in corners formed by the flanges 186 of the exterior panel 180 and the flanges 186' of the interior panel 182. The fillet welds 602 penetrate and fuse with the flanges 186, 186' of both the exterior panel 180 and the interior panel 182 to form the joint. In one embodiment, the fillet welds 602 are sized to have a height that is approximately equal to a thickness of the flange 186 of the exterior panel 180 (shown in Figure 13B). It is understood, however, that the fillet welds 602 can have any suitable size.

During the fillet welding process, external filler wire can be added. In one embodiment, the filler wire includes the same or similar material as the exterior panel 180 and/or the interior panel 182. It is contemplated that the filler wire can be made from materials different than those of the exterior panel 180 and/or the interior panel 182. Conventional welding processes, such as Gas Metal Arc welding (GMAW), Flux Cored Arc welding (FCAW), Shield Manual Welding (SMAW) and Gas Tungsten Arc Welding processes, can be used to form the fillet welds 602. Typically, the fillet welds 602 work well with shear stress type of loading.

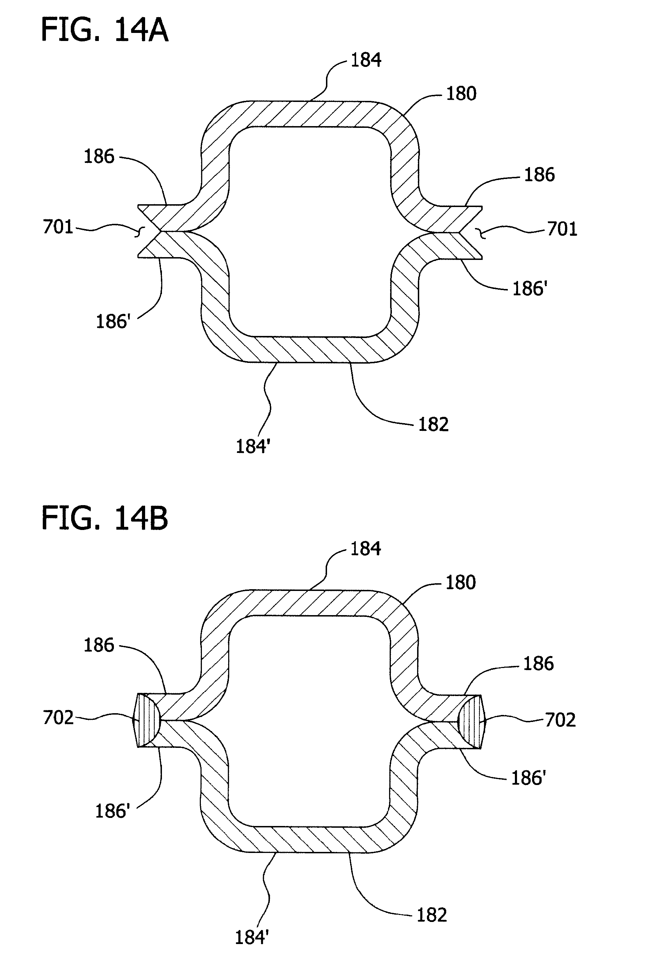

Figures 14A and 14B illustrate a fusion welding process that can be used to securely join the exterior panel 180 and the interior panel 182 together. In the illustrated embodiment, each of the flanges 186, 186' of the exterior panel 180 and the interior panel 182 are tapered and, when engaged, collectively form a generally v-shaped notch 701. During the fusion welding process, external filler wire is added to the generally v-shaped notch 701 to form fusion welds 702. In one embodiment, the filler wire comprises the same or similar material as the exterior panel 180 and/or the interior panel 182. It is contemplated that the filler wire can be made from materials different than those of the exterior panel 180 and/or the interior panel 182. Conventional welding processes, such as Gas Metal Arc welding (GMAW), Flux Cored Arc welding (FCAW), Shield Manual Welding (SMAW) and Gas Tungsten Arc Welding processes, can be used to form the fusion welds 702.

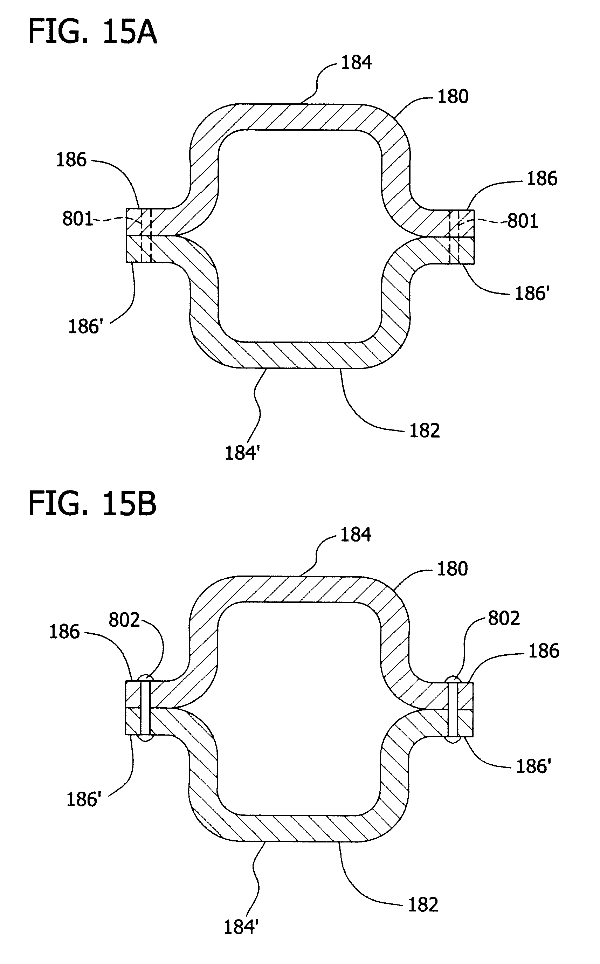

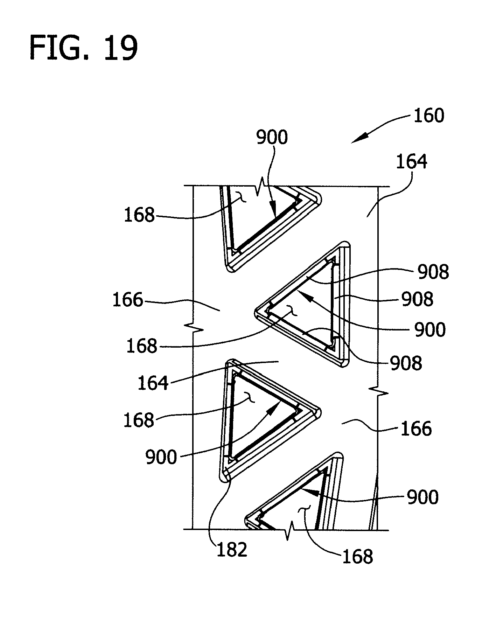

The exterior and interior panels 180, 182 can also be mechanically joined together, e.g., by using mechanical fasteners (shown in Figures 15A and 15B) or by crimping (shown in Figure 19). As seen in Figure 15A, a plurality of holes 801 can be drilled or otherwise formed in the flanges 186, 186' of the exterior and interior panels 180, 182. Rivets 802 (or other suitable mechanical fasteners, e.g., bolts, screws) can be inserted through the holes 801. Because there is effectively a head on each end of each of the installed rivets 802, the rivets can collective support tension loads (i.e., loads parallel to the axis of the shafts of the rivets). However, the rivets 802 are more capable of supporting shear loads (i.e., loads perpendicular to the axis of the shafts of the rivets).

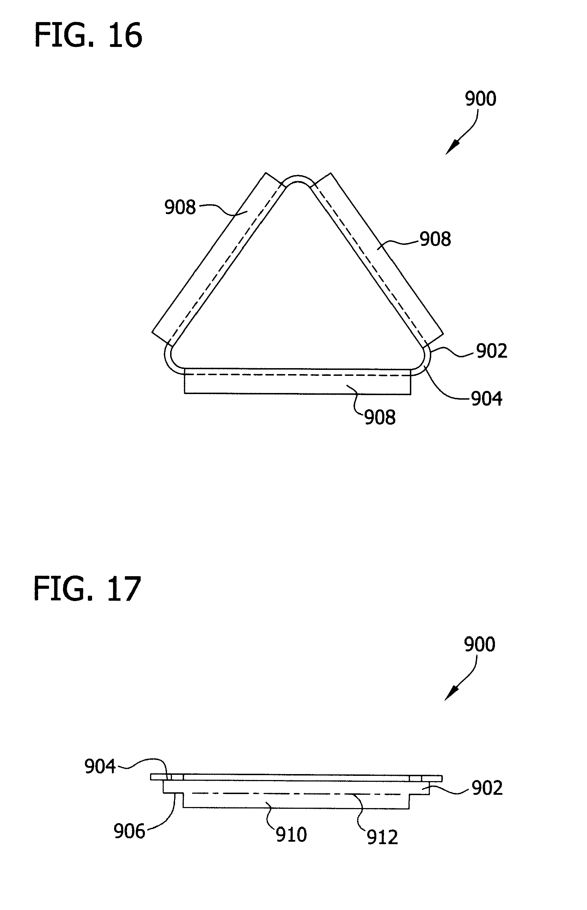

Figures 16 and 17 illustrate a crimpable insert 900 which includes a generally upright wall 902 having a top 904 and a bottom 906. The wall 902 is formed to have a triangular shape to generally match the shape of one or more openings 168 in the spaceframe 160. The wall 902 can have other shapes besides triangular to accommodate other opening shapes in the spaceframe 160. A plurality of upper flanges 908 (three being shown in Figure 16) extend radially outward from the top 904 of the wall 902 and a plurality of lower flanges 910 (one of the three lower flanges being shown in Figure 17) extend downward from the bottom 906 of the wall. Each of the lower flanges 910 is bendable about a fold line 912. It is contemplated that the insert 900 can have more or fewer upper flanges 908 and/or lower flanges 910.

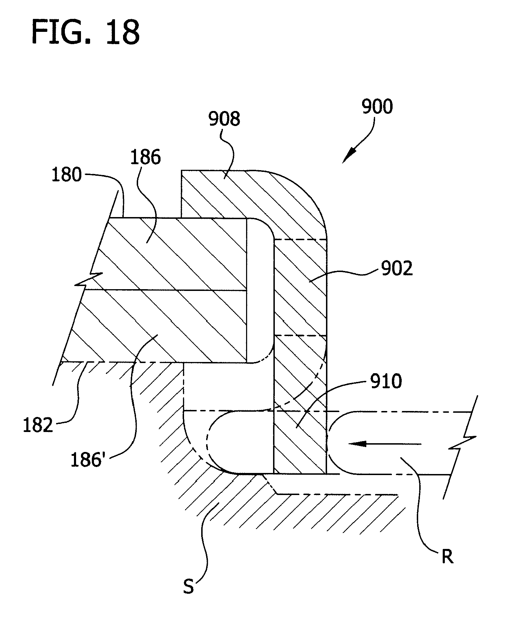

In use, the insert 900 is placed in one of the openings 168 formed in the spaceframe 160 so that each of the upper flanges 908 engage one of the flanges 186 of the exterior panel 180 as seen in Figures 18 and 19. As illustrated in Figure 18 with respect to one of the three lower flanges 910, the lower flanges of the insert 900 extend beyond the flange 186' of the interior panel 182. It is understood that the insert 900 can be placed into the opening 168 in the opposite direction so that each of the upper flanges 908 engage one of the flanges 186' of the interior panel 182. A suitable bending device, such as a push rod R and a support S of a crimping machine (not shown), can be used to bend the lower flange 910 about the fold line 912 so that the lower flange 910 engages the flange 186' of the interior panel 182. Figure 18 shows the push rod R and the support S and the lower flange 910 of the insert 900 in phantom engaging the flange 186' of the interior panel 182. Figure 19 illustrate a plurality of inserts 900 being used to secure the exterior panel 180 and the interior panel 182 of the spaceframe 160 together. The inserts 900 are specifically designed to provide sufficient clamping load in all primary load paths and direction.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A nacelle for a wind turbine generator, the nacelle comprising a spaceframe including at least one exterior panel and at least one interior panel joined to the exterior panel, each of the exterior and interior panels having a plurality of generally U-shaped channel portions with flanges extending outward from the channel portion, the flanges of the exterior panel being joined to the flanges of the interior panel to define a plurality of ribs, a plurality of joints, and a plurality of openings.
2. The nacelle of Clause 1, wherein the exterior and interior panels are joined together by welds.
3. The nacelle of any preceding Clause, wherein the exterior and interior panels are joined together using rivets.
4. The nacelle of any preceding Clause, wherein the exterior and interior panels are joined together using crimping inserts.
5. The nacelle of any preceding Clause, wherein each of the exterior panel and the interior panel is a stamped sheet metal member.
6. The nacelle of any preceding Clause, wherein each of the ribs has a generally square cross-sectional shape.
7. The nacelle of any preceding Clause, further comprising a shell covering the spaceframe.
8. A nacelle for a wind turbine generator, the nacelle comprising a spaceframe including a plurality of ribs, a plurality of joints, and a plurality of openings, the spaceframe comprising at least a first region and a second region, the first region having a first load-bearing strength and the second region having a second load-bearing strength, the first load-bearing strength of the first region being greater than the second load-bearing strength of the second region.
9. The nacelle of any preceding Clause, wherein the openings of the spaceframe located in the second region are larger than the openings located in the first region.
10. The nacelle of any preceding Clause, wherein the ribs and joints of the spaceframe located in the second region are formed from a material that is different than a material used to form the ribs and joints located in the first region.
11. The nacelle of any preceding Clause, wherein an average mass of the spaceframe is approximately 50% to 76% less than an average mass of a conventional, bedplate nacelle adapted for use with the same sized wind turbine generator as the spaceframe.
12. The nacelle of any preceding Clause, wherein the spaceframe comprises a front region, a back region, and a middle region extending between the front and back regions, and wherein the first region corresponds to the front region and the second region corresponds to the middle region.
13. The nacelle of any preceding Clause, wherein the spaceframe is optimized so that each of the regions of the spaceframe has a predetermined strength, stiffness, and fatigue life.
14. A wind turbine generator comprising:
   a tower;
   a nacelle rotatably coupled to a top of the tower for rotational movement with respect to the tower, the nacelle comprising a spaceframe including at least one exterior panel and at least one interior panel joined to the exterior panel, the exterior panel and the interior panel collectively defining a plurality of ribs, a plurality of joints, and a plurality of openings; and
   a blade and hub assembly operatively coupled to the nacelle.
15. A method of constructing a spaceframe for a nacelle, said method comprising:
   stamping a first sheet of metal to form a plurality of openings therein;
   forming a plurality of generally U-shaped channels with flanges extending outward from the channels in the first sheet of metal;
   stamping a second sheet of metal to form a plurality of openings therein;
   forming a plurality of generally U-shaped channels with flanges extending outward from the channels in the second sheet of metal;
   aligning the U-shaped channels and associated flanges of the first sheet of metal with the U-shaped channels and associated flanges of the second sheet of metal so that the aligned U-shaped channels cooperatively define a generally box-shaped cross-section and the flanges are in engagement; and
   securely joining the flanges of the first sheet of metal and the flanges of the second sheet of metal.
16. The method of any preceding Clause, wherein securely joining the flanges of the first sheet of metal and the flanges of the second sheet of metal comprises welding the flanges of the first sheet of metal and the flanges of the second sheet of metal together.
17. The method of any preceding Clause, wherein welding the flanges of the first sheet of metal and the flanges of the second sheet of metal comprises welding the flanges together using a resistance seam welding process.
18. The method of any preceding Clause, wherein welding the flanges of the first sheet of metal and the flanges of the second sheet of metal comprises welding the flanges together using a high-energy beam welding process.
19. The method of any preceding Clause, wherein securely joining the flanges of the first sheet of metal and the flanges of the second sheet of metal comprises crimping the flanges of the first sheet of metal and the flanges of the second sheet of metal together using a crimpable insert, said insert being designed to provide sufficient clamping load in all primary load paths and direction.
20. The method of any preceding Clause, wherein securely joining the flanges of the first sheet of metal and the flanges of the second sheet of metal comprises inserting mechanical fasteners through the flanges of the first sheet of metal and the flanges of the second sheet of metal.

## Claims

1. A nacelle (106) for a wind turbine generator (100), the nacelle comprising a spaceframe (160,260) including at least one exterior panel (180) and at least one interior panel (182) joined to the exterior panel, each of the exterior and interior panels having a plurality of generally U-shaped channel portions (184) with flanges extending outward from the channel portion, the flanges (186) of the exterior panel being joined to the flanges of the interior panel to define a plurality of ribs (264), a plurality of joints (266), and a plurality of openings (268).

2. The nacelle (106) of Claim 1, wherein the exterior (180) and interior panels (182) are joined together by welds (402).

3. The nacelle (106) of any preceding Claim, wherein the exterior (180) and interior panels (182) are joined together using rivets (802).

4. The nacelle (106) of any preceding Claim, wherein the exterior and interior panels (180,182) are joined together using crimping inserts (900).

5. The nacelle (106) of any preceding Claim, wherein each of the exterior panel (180) and the interior panel (182) is a stamped sheet metal member.

6. The nacelle (106) of any preceding Claim, wherein each of the ribs (264) has a generally square cross-sectional shape.

7. The nacelle (106) of any preceding Claim, further comprising a shell (162) covering the spaceframe (160,260).

8. A nacelle (106) for a wind turbine generator (100), the nacelle comprising a spaceframe (160,260) including a plurality of ribs (264), a plurality of joints (266), and a plurality of openings (268), the spaceframe comprising at least a first region and a second region, the first region having a first load-bearing strength and the second region having a second load-bearing strength, the first load-bearing strength of the first region being greater than the second load-bearing strength of the second region.

9. The nacelle (106) of any preceding Claim, wherein the openings (268) of the spaceframe (160,260) located in the second region are larger than the openings located in the first region.

10. The nacelle (106) of any preceding Claim, wherein the ribs (264) and joints (266) of the spaceframe (160,260) located in the second region are formed from a material that is different than a material used to form the ribs and joints located in the first region.
